# EUROPÄISCHE PATENTSCHRIFT

(11) **EP 1 632 393 B1**
(45) Veröffentlichungstag und Bekanntmachung des Hinweises auf die Patenterteilung: **06.02.2008**
(21) Anmeldenummer: 05018753.3
(22) Anmeldetag: 30.08.2005
(51) Int. Cl.: B60R 1/06, B60R 1/074

(54) **Aussenrückblickspiegel für Fahrzeuge, vorzugsweise für Kraftfahrzeuge**
Exterior rear view mirror, in particular for vehicles
Rétroviseur extérieur, particulièrement pour des véhicules

(30) Priorität: 06.09.2004 DE 102004042903
(43) Veröffentlichungstag der Anmeldung: 08.03.2006
(73) Patentinhaber: Schefenacker Patents S.a.r.l., 2346 Luxembourg (LU)
(72) Erfinder: Waldmann, Bernd, 72622 Nürtingen (DE); Leonberger, Karl Heinz, 73269 Hochdorf (DE); Secanu, Florin, 72622 Nürtingen (DE); Pirner, Alexander, 73779 Deizisau (DE)
(74) Vertreter: Jackisch-Kohl, Anna-Katharina

(56) Entgegenhaltungen:
- WO-A-00/55009
- WO-A-20/04009407
- DE-A1- 19 522 699

## Beschreibung

Die Erfindung betrifft einen Außenrückblickspiegel für Fahrzeuge, vorzugsweise für Kraftfahrzeuge, nach dem Oberbegriff des Anspruches 1.

Bei Außenrückblickspiegeln (DE 195 22 699 A1, WO 00/55009 A, WO 20041 009407 A2) ist der Spiegelfuß, der an der Seite des Fahrzeuges befestigt wird, L-förmig ausgebildet. Der Spiegelkopf ist mit seinem Gehäuse auf dem quer abstehenden Schenkel des Spiegelfußes abklappbar gelagert. Das Gehäuse des Spiegelkopfes ist in Ansicht etwa rechteckförmig gestaltet. Der Anschluss des Gehäuses des Spiegelkopfes an den quer abstehenden Teil des Spiegelfußes erfolgt im Eckbereich des Gehäuses. Zwischen dem Spiegelfuß und dem Spiegelkopf wird eine Einschnürung gebildet, in der sich die Trennstelle zwischen Spiegelfuß und Spiegelkopf befindet. Aufgrund dieser Ausbildung treten beim Fahren Windgeräusche auf, die teilweise so stark sind, dass sie vom Fahrer als störend empfunden werden.

Der Erfindung liegt die Aufgabe zugrunde, den gattungsgemäßen Außenrückblickspiegel so auszubilden, dass er problemlos im Einsatz ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel ist das Gehäuse des Spiegelkopfes mit der Einschnürung versehen, über die das Gehäuse in den Anschlussteil des Spiegelkopfes übergeht. Mit dem Anschlussteil wird der Spiegelkopf am Spiegelfuß montiert. Die Einschnürung ist somit im Spiegelkopf vorgesehen. Der Spiegelfuß kann darum in seiner Bauhöhe sehr klein gehalten werden. Die Einschnürung des Spiegelkopfes verhindert das Auftreten von Windgeräuschen, da der Fahrtwind problemlos durch die Einschnürung strömen kann und sich nicht an Teilen des Außenrückblickspiegels verfängt. Der erfindungsgemäße Außenrückblickspiegel ist infolge der erfindungsgemäßen Ausbildung strömungsgünstig gestaltet. Zudem wirkt der Außenrückblickspiegel aufgrund der Einschnürung leicht und klein.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Rückansicht einen erfindungsgemäßen Außenrückblickspiegel,
- Fig. 2: den erfindungsgemäßen Außenrückblickspiegel in Vorderansicht,
- Fig. 3: den Spiegelkopf des erfindungsgemäßen Außenrückblickspiegels in Stirnansicht.

Der Außenrückblickspiegel ist für Kraftfahrzeuge vorgesehen und hat einen Spiegelfuß 1 mit einem (nicht dargestellten) Befestigungsteil, mit dem der Außenrückblickspiegel am Kraftfahrzeug befestigt wird. Er hat ein umlaufendes Dichtungselement 2, das den Spiegelfuß 1 in montierter Lage umgibt und abdichtet. Am Spiegelfuß 1 ist mit einem Anschlußteil 3, der einstückig mit einem Gehäuse 4 eines Spiegelkopfes 5 ausgebildet ist, der Spiegelkopf befestigt. Der Anschlußteil 3 ist in seiner Umrißform an das Dichtungselement angepaßt, so daß beide Teile gleiche Umrißform haben. Der Anschlußteil 3 ist als Hohlkörper ausgebildet, der über eine umlaufende Vertiefung bzw. Einschnürung 6 in das Gehäuse 4 des Spiegelkopfes 5 übergeht. Die Vertiefung 6 wird durch Seitenwände 7, 8 des Anschlußteiles 3 sowie des Gehäuses 4 begrenzt. Beide Seitenwände 7, 8 schließen einen Winkel von < 45° ein und gehen bogenförmig gekrümmt ineinander über. Die Tiefe der Vertiefung 6 ist vorteilhaft größer als deren maximale Breite. Aufgrund dieser Abmessungen ergibt sich am Übergang vom Gehäuse 4 zum Anschlußteil 3 eine sehr schmale und tiefe Einschnürung. Sie liegt in der dem Kraftfahrzeug zugewandten Hälfte des Außenrückblickspiegels.

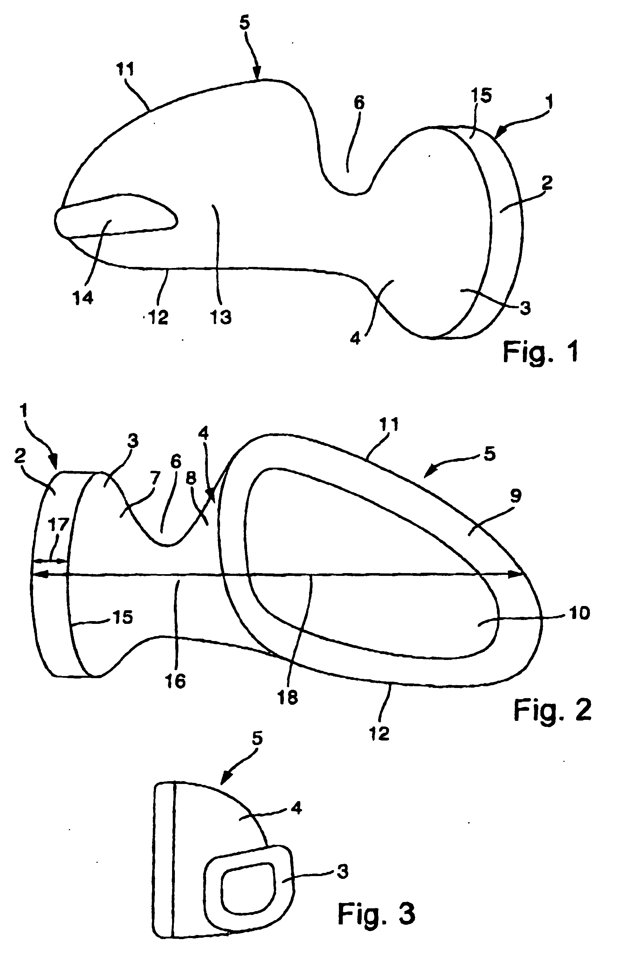

Das Gehäuse 4 des Spiegelkopfes 5 verjüngt sich in Richtung auf das vom Kraftfahrzeug abgewandte Ende. Das Gehäuse 4 hat einen Aufnahmeraum 9, in dem ein (nicht dargestellter) Spiegelglasträger für ein Spiegelglas 10 untergebracht ist. Der den Aufnahmeraum 9 begrenzende obere Rand 11 ist schräg nach unten in Richtung auf den Boden stetig gekrümmt. Dabei weist dieser Rand 11 am Übergang in die nutartige Vertiefung 6 den größten Bodenabstand auf. Der untere, den Aufnahmeraum 9 begrenzende Rand 12 des Gehäuses 4 verläuft ebenfalls schräg in Richtung auf den Untergrund, jedoch unter einem wesentlich kleineren Winkel als der obere Rand. Die beiden Ränder 11, 12 gehen am äußeren Ende stetig gekrümmt ineinander über. Wie sich aus Fig. 3 ergibt, ist das Spiegelkopfgehäuse 4 von seiner die Aufnahmeöffnung für das Spiegelglas 10 begrenzenden Seite aus in Fahrtrichtung nach vorn konkav gekrümmt ausgebildet. Auf diese Weise hat der Spiegelkopf 5 eine strömungsgünstige Form, durch welche Windgeräusche weitgehend vermieden werden.

In der in Fahrtrichtung nach vorn weisenden Seite 13 des Gehäuses 4 befindet sich ein Lichtfenster 14 einer Wiederholblinkleuchte, die im Gehäuse 4 untergebracht ist. Das Lichtfenster 14 erstreckt sich von dem vom Kraftfahrzeug entfernten Ende des Gehäuses 5 aus in Richtung auf den Spiegelfuß 1. Im Ausführungsbeispiel erstreckt sich das Lichtfenster 14 etwa über die halbe Länge des Gehäuses 5. Das Lichtfenster kann jede geeignete Umrißform haben. Das Lichtfenster kann durch eine lichtdurchlässige Scheibe aus Kunststoff, aber auch aus einem Lichtleitermaterial gebildet sein.

Der Spiegelkopf 5 kann gegenüber dem Spiegelfuß 1 in und entgegen Fahrtrichtung abgeklappt werden. Als Abklappmechanismus können alle bekannten Ausbildungen verwendet werden, wie Kugelgelenke, Zwischengelenke und dergleichen. Die Klappbewegung in und entgegen Fahrtrichtung kann hierbei um eine Achse (Einachsspiegel) oder um zwei Achsen (Zweiachsspiegel) erfolgen. Die Schwenkachse(n) liegt (liegen) im Spiegelfuß 1.

Die Abklappbewegung erfolgt hierbei im Bereich zwischen dem Dichtungselement 2 und dem Anschlußteil 3. Da der Spiegelfuß 1 nur eine geringe Dicke hat, liegt die Schnittstelle 15 sehr nahe an der Fahrzeugkarosserie. Dadurch werden Windgeräusche optimal eliminiert. Hierzu trägt auch die in Form der Einschnürung ausgebildete Vertiefung 6 bei. Zwischen dem Gehäuse 4 und dem Anschlußteil 3 wird infolge der Vertiefung 6 ein schmaler, im Querschnitt runder hohler Steg 16 gebildet, an dem der Fahrtwind problemlos vorbeistreichen kann. Der Steg 16 liegt näher am unteren Rand 11 als am oberen Rand 10 des Gehäuses 4. Die Vertiefung 6 hat darum im oberen Bereich, bezogen auf die Gebrauchslage des Spiegelkopfes 5, eine größere Tiefe als im unteren Bereich. Da die Seitenwände 7, 8 der Vertiefung 6 nicht nur im Schnitt, sondern auch in Umfangsrichtung stetig gekrümmt verlaufen, wird der Fahrtwind strömungstechnisch optimal abgelenkt. Aufgrund der beschriebenen Ausbildung entstehen im Bereich zwischen dem Anschlußteil 3 und dem Gehäuse 4 keine Luftwirbel, die zu einer Geräuschentwicklung führen würden. Auch wird dadurch eine Verschmutzung der Seitenfenster des Kraftfahrzeuges vermieden, die beim Luftwirbeln sonst zu beobachten ist.

Schließlich werden die Vibrationen des Spiegelglases 10 bzw. des Spiegelkopfes 5 aufgrund der optimalen Strömung des Fahrtwindes zumindest erheblich reduziert.

Das Dichtungselement 2 und damit der Spiegelfuß 1 haben eine Höhe 17, die etwa einem Zehntel bis etwa einem Zwanzigstel der Breite 18 des Außenrückblickspiegels entspricht (Fig. 2).

## Patentansprüche

1. Außenrückblickspiegel für Fahrzeuge, vorzugsweise für Kraftfahrzeuge, mit einem Spiegelfuß (1) und einem Spiegelkopf (5), der gegenüber dem Spiegelfuß (1) abklappbar ist und der ein Gehäuse (4) aufweist, und mit einer Einschnürung (6),
**dadurch gekennzeichnet, dass** die Einschnürung (6) zwischen dem Gehäuse (4) des Spiegelkopfes (5) und einem Anschlussteil (3) vorgesehen ist, der Teil des Spiegelkopfes (5) ist und mit dem der Spiegelkopf (5) an den Spiegelfuß (1) anschließt.

2. Außenrückblickspiegel nach Anspruch 1,
**dadurch gekennzeichnet, dass** der Anschlussteil (3) gelenkig mit einem Befestigungstell des Spiegelfußes (1) verbunden ist.

3. Außenrückblickspiegel nach Anspruch 1 oder 2,
**dadurch gekennzeichnet, dass** die Einschnürung (6) durch in Umfangsrichtung stetig gekrümmt verlaufende Seitenwände (7, 8) begrenzt ist.

4. Außenrückblickspiegel nach Anspruch 3,
**dadurch gekennzeichnet, dass** die Seitenwände (7, 8) der Einschnürung (6) im Querschnitt gekrümmt verlaufen.

5. Außenrückblickspiegel nach einem der Ansprüche 1 bis 4,
**dadurch gekennzeichnet, dass** die Tiefe der Einschnürung (6) zumindest gleich, vorzugsweise größer ist als die maximale Breite der Einschnürung (6).

6. Außenrückblickspiegel nach einem der Ansprüche 2 bis 5,
**dadurch gekennzeichnet, dass** die Höhe (17) des Spiegelfußes (1) etwa einem Zehntel bis etwa einem Zwanzigstel der Breite (18) des Außenrückblickspiegels entspricht.

7. Außenrückblickspiegel nach einem der Ansprüche 1 bis 6,
**dadurch gekennzeichnet, dass** das Gehäuse (4) und der Anschlußteil (3) über einen Steg (16) miteinander verbunden sind.

8. Außenrückblickspiegel nach Anspruch 7,
**dadurch gekennzeichnet, dass** der Steg (16) einen kleineren Abstand von der Unterseite (12) des Gehäuses (4) hat als von dessen Oberseite (11).

9. Außenrückblickspiegel nach einem der Ansprüche 1 bis 8, **dadurch gekennzeichnet, dass** die Einschnürung (6) in der dem Fahrzeug zugewandten Hälfte des Außenrückblickspiegels vorgesehen ist.

## Claims

1. Exterior rearview mirror for vehicles, preferably for motor vehicles, having a mirror foot (1) and having a mirror head (5) which can be folded relative to the mirror foot (1) and which has a housing (4), and having a constriction (6),
**characterized in that** the constriction (6) is provided between the housing (4) of the mirror head (5) and a connecting part (3) which is part of the mirror head (5) and by means of which the mirror head (5) adjoins the mirror foot (1).

2. Exterior rearview mirror according to Claim 1,
**characterized in that** the connecting part (3) is articulatedly connected to a fastening part of the mirror foot (1).

3. Exterior rearview mirror according to Claim 1 or 2,
**characterized in that** the constriction (6) is delimited by side walls (7, 8) which run in a continuously curved fashion in the peripheral direction.

4. Exterior rearview mirror according to Claim 3,
**characterized in that** the side walls (7, 8) of the constriction (6) run in a curved fashion in cross section.

5. Exterior rearview mirror according to one of Claims 1 to 4,
**characterized in that** the depth of the constriction (6) is at least identical to, preferably greater than the maximum width of the constriction (6).

6. Exterior rearview mirror according to one of Claims 2 to 5,
**characterized in that** the height (17) of the mirror foot (1) corresponds to approximately one-tenth to approximately one-twentieth of the width (18) of the exterior rearview mirror.

7. Exterior rearview mirror according to one of Claims 1 to 6,
**characterized in that** the housing (4) and the connecting part (3) are connected to one another by means of a web (16).

8. Exterior rearview mirror according to Claim 7,
**characterized in that** the web (16) has a smaller spacing from the underside (12) of the housing (4) than from the upper side (11) of the latter.

9. Exterior rearview mirror according to one of Claims 1 to 8,
**characterized in that** the constriction (6) is provided **in that** half of the exterior rearview mirror which faces towards the vehicle.

## Revendications

1. Rétroviseur extérieur pour véhicules, de préférence pour véhicules automobiles, comportant un pied (1) et une tête (5) qui est susceptible d'être rabattue par rapport au pied (1) et qui comprend un boîtier (4), et comportant un rétrécissement (6),
**caractérisé en ce que** le rétrécissement (6) est prévu entre le boîtier (4) de la tête de rétroviseur (5) et une partie de raccordement (3) qui fait partie de la tête de rétroviseur (5) et par laquelle la tête de rétroviseur (5) se raccorde au pied de rétroviseur (1).

2. Rétroviseur extérieur selon la revendication 1,
**caractérisé en ce que** la partie de raccordement (3) est reliée en articulation à une partie de fixation du pied de rétroviseur (1).

3. Rétroviseur extérieur selon la revendication 1 ou 2,
**caractérisé en ce que** le rétrécissement (6) est limité par des parois latérales (7, 8) qui s'étendent en courbure constante en direction périphérique.

4. Rétroviseur extérieur selon la revendication 3,
**caractérisé en ce que** les parois latérales (7, 8) du rétrécissement (6) s'étendent avec une section transversale recourbée.

5. Rétroviseur extérieur selon l'une des revendications 1 à 4,
**caractérisé en ce que** la profondeur du rétrécissement (6) est au moins égale, de préférence supérieure à la largeur maximale du rétrécissement (6).

6. Rétroviseur extérieur selon l'une des revendications 2 à 5,
**caractérisé en ce que** la hauteur (17) du pied de rétroviseur (1) correspond approximativement à un dixième jusqu'à environ un vingtième de la largeur (18) du rétroviseur extérieur.

7. Rétroviseur extérieur selon l'une des revendications 1 à 6,
**caractérisé en ce que** le boîtier (4) et la partie de raccordement (3) sont reliés l'un à l'autre via une barrette (16).

8. Rétroviseur extérieur selon la revendication 7,
**caractérisé en ce que** la barrette (16) présente une distance vis-à-vis du côté inférieur (12) du boîtier (4), qui est inférieure à celle vis-à-vis de son côté supérieur (11).

9. Rétroviseur extérieur selon l'une des revendications 1 à 8,
**caractérisé en ce que** le rétrécissement (6) est prévu dans la moitié du rétroviseur extérieur, qui est tournée vers le véhicule.
